# EUROPÄISCHE PATENTANMELDUNG

(11) **EP 4 332 897 A1**
(43) Veröffentlichungstag der Anmeldung: **06.03.2024**
(21) Anmeldenummer: 22193629.7
(22) Anmeldetag: 02.09.2022
(51) Int. Cl.: G06T 7/521, G06T 7/593

(54) **VORRICHTUNG UND VERFAHREN ZUR DURCHFÜHRUNG EINES INTRAORALEN SCANS**

(71) Anmelder: Brütsch Elektronik AG, 8222 Beringen (CH)
(72) Erfinder: Fischli, René, 8463 Benken (CH); Steiner, Martin, 8248 Uhwiesen (CH); Sulzberger, Lorenz, 8214 Gächlingen (CH); Pinzello, Sebastian, 8180 Bülach (CH)
(74) Vertreter: Stütz, Jan

(57) **Zusammenfassung**

Die Erfindung betrifft ein Verfahren und eine Vorrichtung zum Erstellen von 3-dimensionalen Bildern mit Hilfe einer Intra-Oral-Scan-Vorrichtung.

Bei dem erfindungsgemäßen Verfahren wird ein Farbstreifenmusters (111, 112, 113) auf eine zu erfassende Oberfläche - insbesondere die Zähne (40) - projiziert.

Während der Projektion wird eine Mehrzahl von Bildern mit Hilfe von wenigstens 3 voneinander beabstandeter und in einer Ebene auf der Scan-Vorrichtung angeordneter Kameras (13) aufgenommen.

Dabei umfasst die Mehrzahl von Bildern eine Mehrzahl von Bildergruppen, die jeweils zeitgleich mit Hilfe der wenigstens 3 Kameras (13) aufgenommene Bilder enthalten.

Die Bilder werden dann an eine Recheneinheit weitergeleitet, die dazu ausgebildet ist, wenigstens 2 der von den wenigstens 3 Kameras (13) gleichzeitig aufgenommenen Bildern miteinander zu vergleichen und korrespondierende Pixel oder Mustern in dem Bilderpaar zu finden

Über die Verschiebung kann direkt eine Tiefenkarte berechnet werden. In einem anschließenden Schritt werden die berechneten Tiefenkarten zusammengefügt und schlussendlich ein 3D-Modell berechnet.

Kern der Erfindung liegt darin, dass das projizierte Farbstreifenmuster möglichst stetige Intensitätsverläufe in den einzelnen Farbkanälen erzeugt und übereinstimmende Pixel oder Muster durch einen Vergleich der Richtungen und Längen der Farbvektoren im Farbraum erkannt werden.

## Beschreibung

Die vorliegende Erfindung betrifft ein Verfahren zum Erfassen von Tiefendaten in der Mundhöhle eines Patienten, sowie eine Vorrichtung zur Durchführung dieser Scans und zur Erzeugung eines 3-D Modells des erfassten Bereiches.

Derartige Vorrichtungen werden auch unter dem Begriff Intraoralscanner zusammengefasst.

Durch die Erzeugung eines 3-D Modells des erfassten Bereiches in der Mundhöhle des Patienten können insbesondere die Zähne, Zahnprothesen Kronen, Brücken dargestellt und zahnmedizinische Produkte ohne die konventionelle Abformung mit Hilfe einer Abdruckmasse hergestellt werden. Bislang notwendige Zwischenschritte, wie die Herstellung eines Gips-Modells und die Verwendung eines extraoralen Scansystems können durch einen intraoralen Scan eingespart werden.

Die mit Hilfe eines Intraoral-Scans gewonnenen 3-D Modelle können anschließend in der computergestützten Herstellung eines Zahnersatzes - wie Kronen oder Brücken - oder auch für die computergestützte dentale Diagnostik verwendet werden. Dies ist ein wachsender Markt.

Auf dem Markt sind eine Vielzahl unterschiedlicher Verfahren und Vorrichtungen zum Durchführen eines Intraoral-Scans erhältlich. Dabei haben alle unterschiedlichen Verfahren ihre Vorteile und ihre Nachteile.

Eine Möglichkeit zur Erfassung von Entfernungsdaten bietet die Triangulation. Hierbei ist es möglich, mit Hilfe nur einer Kamera und eines projizierten Musters, eine Entfernungsmessung vorzunehmen. Bei einem Ansatz mit nur einer Kamera ist es erforderlich, die Übereinstimmung zwischen den von der Lichtquelle projizierten Mustern, z.B. Streifen und den im Bild beobachteten Streifen zu kalibrieren.

Im Allgemeinen sind die von der Kamera aufgenommenen Muster aufgrund der unterschiedlichen optischen Eigenschaften der zu scannenden Objekte bzw. Materialien unterschiedlich zum projizierten Muster. Dies ist besonders bei Zähnen der Fall. So können beispielsweise scharfe Kanten des Musters verlaufen, die genaue Triangulation und Zuordnung zum Muster wird somit erschwert.

Um möglichst viele Tiefeninformationen berechnen zu können, müssen möglichst viele Linien dargestellt werden und ausgewertet werden können. Problem ist hier, dass einerseits die Anzahl der auswertbaren Linien durch die optischen Eigenschaften der Zähne begrenzt ist, andererseits lässt sich die Zuordnung zur projizierten Linie nicht mehr herstellen. Um die Zuordnung zur projizierten Linie zu gewährleisten, werden meist mehrere Bilder mit unterschiedlich breiten Streifen aufgenommen und ausgewertet, mit dem Nachteil, dass sich der Intraoralscanner zwischen den Bildern bewegt und dies in der Auswertung berücksichtigt werden muss. Bekannte alternative Verfahren, die Aufgrund der Eigenschaften der Zähne nicht geeignet erscheinen, wären die Streifen zu codieren oder farbige Streifen zu verwenden.

Ein weiterer Ansatz ist die Stereovision, bei der mit Hilfe von zwei Kameras ein räumliches Sehen ermöglicht wird. Hierbei sei aber angemerkt, dass es auch Triangulationsverfahren gibt, bei denen zwei Kameras zum Einsatz kommen.

WO2019085402A1 beschreibt einen Intraoralscanner, welcher mit wenigstens einer Kamera auskommt. Aus diesem Grunde handelt es sich im Prinzip um einen Scanner, welcher auf dem Verfahren der Triangulation beruht.

Grundprinzip bei der Stereovision ist, dass die gleichen Punkte auf einem zu scannenden Gegenstand durch wenigstens zwei Kameras aus unterschiedlichen "Blickrichtungen" aufgenommen werden. Durch die hierbei festgestellte Disparität kann eine Tiefenkarte erzeugt werden und schlussendliche ein 3D Bild des zu scannenden Objektes erzeugt werden. Wie beim Triangulationsverfahren gibt es auch bei der Stereovision viele unterschiedliche Ausführungen.

Beispielsweise gibt es die aktive und die passive Stereovision. Die passive Stereovision kommt entgegen der aktiven Stereovision ohne eine Lichtprojektion auf den zu scannenden Gegenstand aus.

Bei der aktiven Stereovision wird mittels einer Lichtprojektion ein Muster auf den zu scannenden Gegenstand projiziert, das es erlaubt die Disparität eindeutiger und genauer zu bestimmen. Daher werden hier häufig zufällige Muster verwendet.

Gerade bei Zähnen, die zudem im Mund des Patienten auch noch feucht sind, treten viele optische Effekte, verbunden mit teilweiser Transluzenz auf. Fein strukturierte, zufällige Muster könnten nicht mehr eindeutig erkannt werden. Daher sind Muster gefragt, die auf den Zähnen möglichst eindeutig sind und die Zuordnung von Bildausschnitten zwischen dem linken und rechten Bild ermöglichen.

Eine Möglichkeit ist nebst Schwarz/Weiss Mustern, Farben und Farbverlaufe zu verwenden. So lassen sich die Farben sehr gut identifizieren und ermöglichen eine gute Zuordnung. Die Verwendung von Farbstreifen erlaubt maximale Kontraste.

Die Anordnung der Kameras, Projektoren und insgesamt die Geometrie insbesondere des distalen Abschnittes der Scanvorrichtung, welche in die Mundhöhle eines Patienten eingeführt wird, ist bei den bekannten Intraoralscannern häufig unterschiedlich ausgebildet und angepasst auf das jeweils verwendete Scan-Verfahren.

So beschreibt EP2166303A1 einen Intraoralscanner mit einer Vielzahl von Kameras die abwechselnd mit Lichtprojektoren auf dem Gerät angeordnet sind.

WO2016142917A1 beschreibt eine Scan-Vorrichtung, welche die Zähne während des Scannens teilweise umhüllt.

Aufgabe der vorliegenden Erfindung ist es, einen verbesserten Scanner und eine verbesserte Vorrichtung der eingangs angegebenen Art vorzuschlagen, welche ein schnelles und genaues Scannen ermöglicht.

Erfindungsgemäß wird diese Aufgabe durch ein Scan -Verfahren nach Anspruch 1 und eine Scan-Vorrichtung nach Anspruch 11 gelöst. Die Unteransprüche stellen bevorzugte Ausführungen der Erfindung dar. Die Scan-Vorrichtung dient insbesondere zur Abtastung eines oder mehrerer Zähne.

In einem ersten Schritt des erfindungsgemäßen Verfahrens wird für den ScanVorgang bevorzugt mit Hilfe wenigstens eines Projektors ein Farbstreifenmuster auf die zu erfassende Oberfläche projiziert. Während der Projektion des Farbstreifenmusters auf die Oberfläche der Zähne wird mit Hilfe von wenigstens 3 Kameras, die in einer Ebene und seitlich voneinander beabstandet angeordnet sind, fortlaufend oder in kurzen Intervallen eine Gruppe von Bildern bzw. Bildergruppe zeitgleich aufgenommen.

Diese Mehrzahl von Bildern umfasst entsprechend eine Mehrzahl von Bildergruppen, wobei die Bilder der jeweiligen Bildergruppe zeitgleich aufgenommen sind.

Diese Mehrzahl von Bildern wird daraufhin oder kontinuierlich an eine Recheneinheit weitergegeben. Es können ggf. auch nur bestimmte Informationen aus diesen Bildern an die Recheneinheit weitergegeben werden. Diese Variante ist bevorzugt in dem Begriff der Weitergabe der Bilder an die Recheneinheit mit eingeschlossen.

In der Recheneinheit werden dann wenigstens 2 der von den wenigsten 3 zeitgleich aufgenommenen Bilder miteinander verglichen. Diese jeweils 2 miteinander verglichenen Bilder einer Bildergruppe werden im Folgenden als Bilderpaar bezeichnet. Beim Vergleichen der Bilder wird ein Algorithmus verwendet, der dazu ausgebildet ist, korrespondierende Muster in dem Bilderpaar bzw. den Bilderpaaren zu erkennen.

Mit korrespondierenden Mustern sind einzelne Bildpixel oder Bereiche der Bilderpaare gemeint, welche entsprechend voneinander verschoben in den Bilderpaaren abgebildet sind. Aus der Verschiebung (Disparität) der Muster bzw. der Bildpixel des Bilderpaars kann direkt die Tiefe in Form einer Tiefenkarte errechnet werden.

Das Hauptziel der Tiefenschätzung lässt sich auf die Korrespondenzsuche zwecks Disparitätsermittlung zurückführen. Durch Ausrichtung der Kamera lässt sich der Suchaum für korrespondierende Pixel auf eine Zeile reduzieren.

In einem letzten Schritt werden die Tiefenkarten, die aus den Bildern der Bildergruppen erzeugt wurden, zusammengefügt und schlussendlich das 3D-Modell gebildet.

Das vorliegende Verfahren grenzt sich vom Stand der Technik insbesondere auch dadurch ab, dass das erzeugte, auf den Zahn projizierte und von den Kameras erfasste Farbstreifenmuster weitgehend stetige Intensitätsverläufe in den einzelnen Farbkanälen aufweist. Übereinstimmende Pixel oder Muster werden dann durch eine Auswertung im Farbraum detektiert. Dabei werden übereinstimmende Pixel durch Vergleich der Richtungen und Länge der Farbvektoren im Farbraum bestimmt.

Durch die Stetigkeit kann das Rauschen im Bild reduziert werden.

Mit "weitgehend stetig" ist erfindungsgemäß gemeint, dass durch Abschattungen des Projektionsmusters Sprünge auftreten können.

Bevorzugt werden von jeder Bildergruppe wenigstens zwei Bilderpaare gebildet und auf korrespondierende Muster untersucht. Somit können durch die Disparitätsermittlung wenigstes zwei Tiefenkarten erzeugt werden. Durch die Anordnung der Kameras überschneiden sich die Tiefenkarten. Aus den wenigstens zwei Tiefenkarten wird eine Tiefenkarte berechnet, wobei im Überschneidungsbereich die Qualität der Punkte bewertet und verbessert werden.

Die Erzeugung der Farbstreifenmuster kann auf unterschiedliche Weise erfolgen. Gemäß einer bevorzugten Variante der Erfindung, wird das Farbstreifenmuster mit Hilfe von 3 Laserdioden und wenigstens einem diffraktiven optischen Element erzeugt. Nach einer Ausführung sind die 3 Laserdioden, welche sich beispielsweise in einem proximalen Abschnitt des Handstücks der erfindungsgemäßen Vorrichtung befinden, über Lichtwellenleiter mit dem diffraktiven optischen Element verbunden. Das diffraktive optische Element (DOE) ist bevorzugt im distalen Abschnitt des Handstücks der Vorrichtung angeordnet und wird während der Durchführung des Scans in der Mundhöhle eines Patienten positioniert. Das diffraktive optische Element besitzt bevorzugt 3 Bereiche und sorgt dafür, dass rote, grüne und blaue Streifen auf die Zähne projiziert werden.

Gemäß einer zweiten Variante der Erfindung wird das Farbstreifenmuster durch 3 LEDs (bevorzugt rot, grün, blau) und wenigstens eine Filtermaske und ein Objektiv erzeugt. Auch in dieser Ausführung sind die Leuchtelemente - hier LEDs - bevorzugt im proximalen Abschnitt des Handstücks der Vorrichtung angeordnet und über Lichtwellenleiter mit einer Maske verbunden, welche im distalen Abschnitt des Handstücks der Vorrichtung angeordnet ist.

Um Bewegungsunschärfe im Bild zu vermeiden wird das Projektionsmuster für 1ms geblitzt dargestellt. Dadurch wird eine hohe Puls-Lichtleistung von mindestens 300mW für die Lichtquelle benötigt; ohne Berücksichtigung der Verluste durch Filter oder Einkopplung in den Lichtwellenleiter.

Nach einer Ausgestaltung der Erfindung ist vorgesehen, dass die Farbstreifenmuster intermittierend auf die zu erfassende Oberfläche projiziert werden und innerhalb dieser Zeit der Projektion die Bilder wenigstens einer Bildergruppe erfasst werden.

Versetzt zu der intermittierenden Projektion der Farbstreifenmuster kann nach einer bevorzugten Ausführung vorgesehen sein, dass das Licht einer weißen LED die zu erfassende Oberfläche beleuchtet. Hierdurch wird die zu erfassende Oberfläche für das menschliche Auge oder für eine Kamera zur Aufzeichnung und Wiedergabe auf einem Bildschirm besser wahrnehmbar gemacht und die Positionierung und Bewegung des distalen Abschnittes des Handstücks im Mund eines Patienten wird während des Scan-Vorgangs erleichtert.

Das Licht der weißen LED, bzw. das von der Zahnoberfläche reflektierte Licht der weißen LED kann bevorzugt dazu verwendet werden, die Farbe der Zähne, bzw. der zu scannenden Oberfläche zu bestimmen. Hierfür kann vorgesehen sein, dass ein Bild mit Hilfe einer der Kameras während der Beleuchtung der zu scannenden Oberfläche mit der weißen LED aufgenommen und an eine Recheneinheit weitergegeben wird.

Bevorzugt verfügt die erfindungsgemäße Scan-Vorrichtung über einen Beschleunigungssensor. Liegt die festgestellte Beschleunigung respektive Bewegung über einem vorherbestimmten Schwellwert, wird der Scan-Vorgang gemäß einer Ausführungsform unterbrochen oder beendet. Hierdurch wird der ScanVorgang bei zu heftigen Bewegungen unterbrochen und kann bei sanfteren Bewegungen wieder fortgesetzt werden.

Nach einer weiteren Ausführungsform des erfindungsgemäßen Verfahrens und der erfindungsgemäßen Vorrichtung ist vorgesehen, dass die vom Beschleunigungssensor erfassten Bewegungsänderungen von einem Prozessor mit vorgegebenen, in einer Speichereinheit abgelegten Bewegungsänderungsdaten verglichen werden. Hierdurch kann eine Gestensteuerung durch den Anwender vorgenommen werden.

Das erfindungsgemäße Verfahren kommt im Gegensatz zu Triangulationsverfahren prinzipiell ohne ständige Kalibrierungen aus. Ausschließlich eine werksmäßige Kalibrierung der Kameraoptik ist vorgesehen.

Zum Erstellen von 3-dimensionalen Bildern insbesondere der Zähne eines Patienten mit Hilfe des voranstehend beschriebenen Verfahrens wird eine erfindungsgemäße Scan-Vorrichtung vorgeschlagen.

Die erfindungsgemäße Scan-Vorrichtung umfasst dabei ein Handstück, welches über einen proximalen Abschnitt und einen distalen Abschnitt zum Einführen in die Mundhöhle eines Patienten verfügt. Zudem umfasst die Scan-Vorrichtung über eine Recheneinheit und eine Steuereinheit.

Das Handstück ist dabei zum Austausch von Informationen mit einer Steuereinheit, und mit einer Recheneinheit verbunden. Nach einer Ausführung ist das Handstück über ein Kabel mit der Steuereinheit und/oder Recheneinheit verbunden. Nach einer weiteren Ausführung kann aber auch ein System zur drahtlosen Übertragung von Informationen zwischen dem Handstück und der Recheneinheit und/oder der Steuereinheit vorgesehen sein.

Auf dem distalen Abschnitt des Handstücks befinden sich wenigstens 2, typischerweise 3 Kameras, die zur Durchführung eines Scans verwendet werden. Dabei sind die 3 Kameras in einer Ebene angeordnet. Neben der Ausführung mit 3 Kameras sind aber auch Ausführungen mit 4 oder mehr Kameras möglich.

Auf dem distalen Abschnitt befindet sich ebenfalls ein System zur Erzeugung eines Farbstreifenmusters bzw. zumindest Komponenten hiervon. Bevorzugt wird das Farbstreifenmuster mit Hilfe eines diffraktiven optischen Elementes (DOE) zusammen mit wenigstens 3 Laserdioden erzeugt. Vorzugsweise sind die wenigstens 3 Laserdioden in dem proximalen Abschnitt des Handstücks angeordnet und über Lichtwellenleiter mit dem DOE auf dem distalen Abschnitt des Handstücks verbunden.

Das DOE hat bevorzugt 3 unterschiedliche Bereiche, sodass jedes der 3 LaserDioden optisch jeweils in einen Bereich des DOEs eingekoppelt ist. Bevorzugt sind die 3 Laserdioden rot, grün und blau.

Das DOE ist nach einer besonders bevorzugten Ausführung so gestaltet, dass es rote, grüne und blaue Farbstreifen mit einer Breite von 700 bis 1800 Mikrometern in einem Abstand von 6-14mm von der zu scannenden Oberfläche, insbesondere den Zähnen erzeugt.

Gemäß einer alternativen Ausführungsform ist vorgesehen, dass das Farbstreifenmuster mit wenigstens 3 Farb-LEDs (rot, grün und blau) und einer Maske sowie einem Objektiv erzeugt wird. Es ist auch nach einer Ausführung die Verwendung von jeweils einer Maske pro Farbe vorgesehen.

Die Steuereinheit der Scan-Vorrichtung ist dazu ausgebildet, die auf dem distalen Abschnitt angeordneten Kameras anzusteuern, um währen des Scan-Vorgangs zeitgleich eine Reihe von Aufnahmen zu tätigen und an eine Recheneinheit weiterzuleiten. Die Recheneinheit ist erfindungsgemäß dazu ausgebildet, die aufgenommenen Bilder in Anwendung eines stereo-matching Verfahrens auszuwerten. Dadurch ist es möglich, Tiefenkarten der Bilder zu erzeugen, welche durch die Recheneinheit der Vorrichtung oder durch eine externe Recheneinheit in ein 3D-Modell überführt werden.

Kern der Erfindung besteht darin, dass die DOEs zusammen mit den Laserdioden oder die LEDs zusammen mit der Maske und dem Objektiv ein Farbstreifenmuster erzeugen, welches stetige Intensitätsübergänge aufweist.

Die Recheneinheit ist erfindungsgemäß dazu ausgebildet, Änderungen im Farbraum zur Erkennung übereinstimmender Muster in den Bilderpaaren zu verwenden.

Gemäß einer Ausführungsform verfügt die Scan-Vorrichtung in dem Handstück über einen Vibrations-Mechanismus. Dieser Vibrationsmechanismus ist dazu ausgebildet, das auf dem distalen Abschnitt befindliche DOE in Bewegung zu setzen. Die von dem DOE erzeugten und auf die zu scannende Oberfläche projizierten Farbstreifen verwischen hierdurch, was gleichzusetzen ist mit der Erzeugung stetiger Intensitätsübergänge des Farbstreifenmusters. Bevorzugt ist der Intensitätsübergang sinusförmig oder annähernd sinusförmig. Ein weiterer wichtiger Effekt hierbei ist auch die Reduktion von Speckles jeglicher Art, die durch den Laser entstehen.

Bei beiden Ausführungsformenwerden die Laserdioden bzw. die LEDs mit einer Pulslänge von zwischen 0,1 und 2.5 ms betrieben. Besonders bevorzugt etwa 1ms. Diese Zeit reicht aus, damit wenigstens eine Bildergruppe, also 3 zeitgleich aufgenommene Bilder aufgenommen werden können. Durch die kurze Beleuchtungszeit kann die Unschärfe durch die Bewegung reduziert werden, auch ermöglicht dies die Verwendung von Rolling-Shutter Kamera-Sensoren.

Als Kameras der Scan-Vorrichtung können dadurch so genannte Rolling-Shutter Sensoren eingesetzt werden, die aufgrund ihrer Größe und der integrierten Optik zum Einsatz bevorzugt sind.

Nach einer weiteren Ausführung der Scan-Vorrichtung mit LED Projektor ist zwischen den Lichtwellenleitern und der Filtermaske ein Kollimator angeordnet. Hinter der Filtermaske ist bevorzugt ein Objektiv angeordnet. Mit diesem ist es möglich, das Farbstreifenmuster "unscharf" auf die zu scannende Oberfläche abzubilden. Auch hierdurch kann ein stetiger und bevorzugt sinusförmiger Intensitätsübergang geschaffen werden.

Gemäß einer weiteren Variante der Erfindung ist vorgesehen, dass die Steuereinheit dazu ausgebildet ist, die Lichtstärke der Laserdioden oder LEDs während des Scan-Vorgangs zu variieren.

Nach einer weiteren Ausführung der Erfindung ist vorgesehen, dass die Steuereinheit die Lichtstärke der Laserdioden bzw. LEDs in Abhängigkeit der Intensitätwerte der Farben anpasst, welche von wenigstens einer Kamera aufgenommenen wurden.

Ein Vorteil der erfindungsgemäßen Scan-Vorrichtung ist in der geringen Scan-Distanz zu sehen. Um diese Distanz weiter zu verringern, ist gemäß einer Ausgestaltung der Erfindung ein Prisma vorgesehen, welches in optischer Richtung vor den Kameras angeordnet ist.

Ein weiterer Vorteil der Erfindung ist darin zu sehen, dass bei der Verwendung von mindestens 3 Kameras - insbesondere wenn der Scan-Vorgang über die Innen- und Außenkanten der Zähne erfolgt - der distale Abschnitt des Handstücks nur einmal über die Außenkante und einmal über die Innenkante der Zähne geführt werden muss (jeweils für den Ober- bzw. Unterkiefer).

Um ein Führen des distalen Abschnittes des Handstücks über die Kanten der Zähne besser zu ermöglichen, sind nach einer Ausführungsform der Erfindung seitlich zu den Kameras der Scan-Vorrichtung "Flügel" als Führungshilfe vorgesehen. Die Flügel sind dabei so ausgebildet und ausgerichtet, dass beim Führen des distalen Abschnittes über die Kanten der Zähne, besagte Kante zwischen den Flügeln Platz finden. Dabei berühren die Innenseiten der Flügel entweder die Vorderseite und die Oberseite oder die Rückseite der Zähne sowie die Oberseite der Zähne (insbesondere der Backenzähne). Die Flügel sind also dazu ausgebildet, sich auf besagten Seiten abzustützen und zu ermöglichen, dass über die Kante gescannt werden kann. Der Begriff "über die Kante scannen" bedeutet im Kontext dieser Erfindung, dass mit dem distalen Abschnitt der Scan-Vorrichtung einmal entlang der vorderen Kante der Zähne und einmal entlang der hinteren Kante der Zähne gefahren wird.

Die Flügel haben hierfür bevorzugt einen Abstand von zwischen 1 und 2 mm voneinander und verlaufen bevorzugt in einem Winkel von etwa 35 Grad gegenüber der Fläche, in der die Kameras angeordnet sind. Sie haben eine Höhe von bevorzugt zwischen 2 und 4 mm.

Um ein Beschlagen der Optik der Kameras und der weiteren optisch wirksamen Komponenten auf dem distalen Abschnitt des Handstücks der Scan-Vorrichtung zu verhindern, verfügt der distale Abschnitt des Handstücks bevorzugt über ein Heizelement und einen Temperatur-Sensor. Das Heizelement zusammen mit dem Temperatursensor und der Steuereinheit sorgen dafür, dass die optisch funktionalen Komponenten über 32° warm bleiben. Hierdurch kann ein Beschlagen der äußeren Oberflächen dieser Komponenten verhindert werden. Durch die Aufrechterhaltung einer konstanten Temperatur für die Kamera und die optischen Elemente verbessert sich zudem die Messgenauigkeit.

Nach dem Scan-Vorgang im Mund eines Patienten muss zumindest der distale Abschnitt des Handstücks der Scan-Vorrichtung autoklaviert werden und ist dementsprechend ausgebildet. Gemäß einer besonders effizienten Ausführungsform kann die Scan-Vorrichtung jedoch auch über eine aufsteckbare Schutzhülle verfügen, die nach jedem Einsatz der Vorrichtung entsorgt oder einzeln autoklaviert werden kann.

Alternativ kann der distale Abschnitt des Handstücks auf den proximalen Teil des Handstücks aufsteckbar ausgestaltet sein und im Ganzen autoklavierbar sein.

Nach einer weiteren Ausgestaltung kann die Vorrichtung neben der Scan-Funktion für den Nahbereich noch einen Modus zur Aufnahme eines Fernbereichs besitzen, sodass auch ein intraoraler Übersichtsscan des Zahnbogens oder eine Aufnahme des Gesichtes bzw. eines Gesichtsbereiches außerhalb der Mundhöhle erfolgen kann.

Im Folgenden wird die Erfindung anhand von Zeichnungen näher beschrieben. Dabei stellen die Zeichnungen nur bevorzugte Ausführrungen dar und sollen nicht als limitierend aufgefasst werden.

Es zeigen:
- Fig. 1: eine schematische Darstellung des Intraoralscanners in einer Ausführung mit diffraktivem optischen Element, sowie Laserdioden;
- Figur 2: eine Darstellung des Intraoralscanners mit LEDs und optischer Farbfiltermaske;
- Figur 3: eine Darstellung des Kopfes mit 3 Kameras;
- Figur 4: eine Darstellung der Anwendung des Intraoralscanners auf Zähnen;
- Figur 5a), b): die Filtermaske bzw. das mit Hilfe der Farbfiltermaske auf einer weißen Oberfläche projizierte Bild;
- Figur 6: Bildergruppe mit auf einen Zahn projiziertem Muster;
- Figur 7: Farbverlauf der Zeile 50 im rechten und mittleren Bild mit den mit den Intensitäten von rot, grün und blau,
- Figur 8: die erfasste Disparität der linken und der mittleren Kamera, sowie der mittleren und rechten Kamera, sowie eine zusammengesetzte Disparitätenkarte.

### Bezugszeichenliste:

- 10: Kopfstück
- 11: Filtermaske
- 12: Umlenkung/ Prisma
- 12a: Umlenkung und Objektiv
- 13: Kamera
- 14: Kollimator
- 15: Projektion
- 16: Diffraktives optisches Element
- 17: Fokussierung/ Linse
- 18: Flügel
- 30: Handstück
- 20: Halsstück
- 21: Lichtleiter
- 31: Stromsteller
- 32a: LEDs
- 32b: Laserdioden
- 33: Einkopplung in Lichtleiter
- 40: Zahnoberfläche/ Modell
- 50: Kamerazeile
- 51: linkes Kamerabild
- 52: mittleres Kamerabild
- 53: rechtes Kamerabild
- 111: Farbfilterstreifen rot
- 112: Farbfilterstreifen grün
- 113: Farbfilterstreifen blau
- 114: Farbfilterstreifen schwarz
- 211: Maxima rot
- 212: Maxima grün
- 213: Maxima blau
- 214: gleiche Intensität rot/grün
- 215: gleiche Intensität rot/ blau
- 216: gleiche Intensität grün/ blau

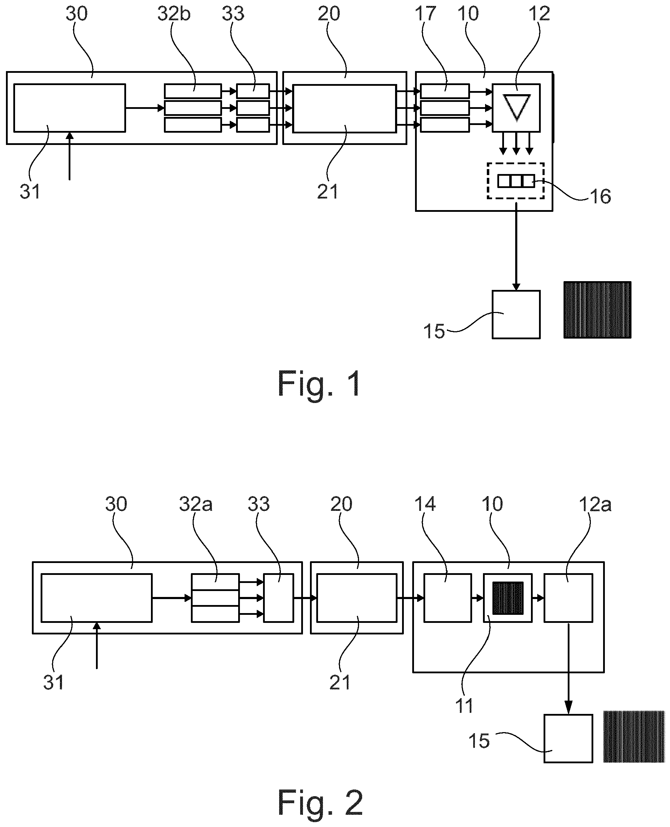

Figur 1 zeigt eine Ausführung des erfindungsgemäßen Intraoralscanners. Insgesamt ist der Intraoralscanner aufgeteilt in ein Handstück 30, ein Halsstück 20, sowie ein Kopfstück 10. Im Handstück 30 ist nach dieser Ausführung ein Stromsteller 31, untergebracht, welche die ebenfalls im Handstück 30 untergebrachten Laserdioden 32b mit Strom versorgt, sodass diese gepulstes Licht mit einer Pulslänge von ca. 1ms erzeugen. Die Laserdioden 32b sind über eine Kopplung 33 mit den Lichtwellenleitern 21 verbunden, welche durch das Halsstück 20 des Scanners verlaufen. Die Lichtwellenleiter 21 sind optisch über eine im Kopfstück 10 untergebrachte Fokussierung bzw. Linse 17, eine 90° Umlenkung mittels Prisma 12 mit einem diffraktiven optischen Element 16 gekoppelt. Die Linse ist vorzugsweise eine GRIN-Linse. Das diffraktive optische Element hat dabei 3 Bereiche (RGB) und erzeugt schlussendlich das Farbstreifenmuster zur Projektion auf die Zähne eines Patienten. Nicht zu sehen sind in dieser Darstellung die Kameras des Intraoralscanners.

Figur 2 zeigt eine Ausführungsform des Intraoralscanners, welche anstelle der Laserdioden über 3 Farb-LEDs verfügt (RGB). Diese sind wie in Figur 1 mit einem gepulsten Strom von etwa 1ms beaufschlagt um entsprechende Lichtblitze zu erzeugen. Auch in dieser Ausführung ist im Handstück 30 wieder eine Kopplung 33 vorgesehen, welche die LEDs optisch mit dem im Halsstück 20 angeordneten Lichtwellenleiter 21 verbindet. Im Kopfstück 10 des Intraoralscanners sind ein Kollimator 14, eine Filtermaske 11, ein Objektiv mit 90° Umlenkung 12a angeordnet. Schlussendlich treten ca. 100 mW Leistung pro Farbe bei der Projektion 15 aus. Nicht zu sehen sind in dieser Darstellung die Kameras des Intraoralscanners.

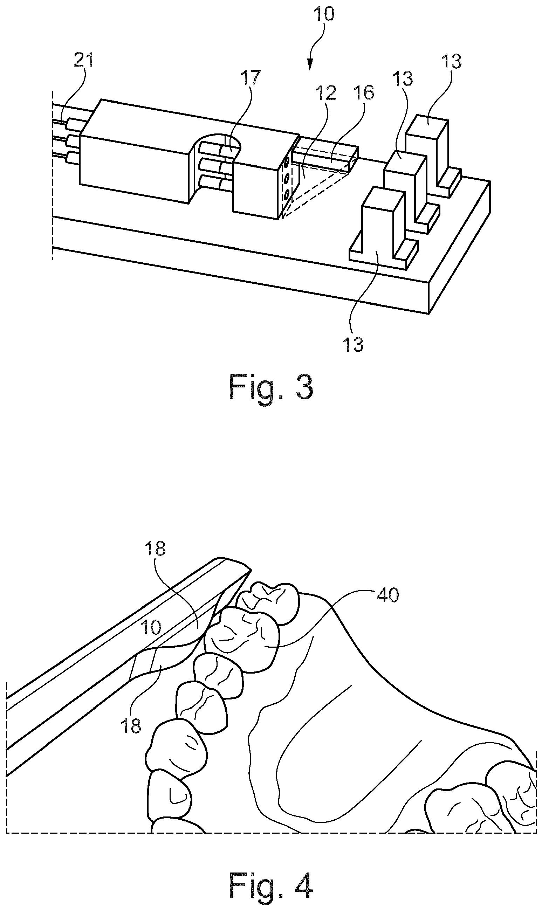

Figur 3 ist eine Darstellung des Kopfstücks 10 des Intraoralscanners mit 3 Kameras 13. An die Lichtwellenleiter 21 sind die zylinderförmigen Linsen 17 zur Fokussierung angebracht. Die Laserstrahlen werden hierdurch auf das diffraktive optische Element (DOE) 16 über ein Prisma 12 gesendet. Im DOE 16 entsteht das Farbstreifenmuster und wird auf die zu scannende Oberfläche - hier die Zähne 40 eines Patienten) projiziert. Das von den Zähnen reflektierte Licht wird daraufhin von den 3 Kameras 13 eingefangen. Die erhaltenen Signale werden dann ganz - oder zumindes teilweise an eine Recheneinheit zur Bestimmung der Disparitäten der einzelnen Pixel weitergegeben.

Figur 4 zeigt den Intraoralscanner im Anwendungsfall auf einem Zahnmodell 40. In dieser Darstellung wird deutlich, dass mit Hilfe des Scanners über die Kante der Zähne gescannt wird. Um den Scanner entsprechend führen zu können, besitzt das Kopfstück zwei Flügel 18, die seitlich die Ebene der Kameras begrenzen. Während des Scannens wird dann eine Kante der Zähne - d.h. die innere oder äußere Kante der Zähne zwischen den Flügeln 18 positioniert. Die Flügel sind entsprechend bevorzugt zwischen 1 und 2 mm voneinander beanstandet und weisen einen Winkel von 35 Grad gegenüber der Ebene der Kameras auf.

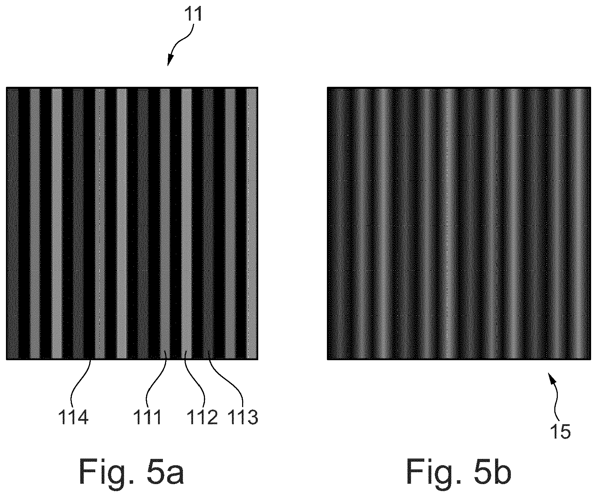

Figur 5a zeigt die Filtermaske 11 zur Erzeugung des Farbstreifenmusters mit Hilfe von LEDs. Gemäß der hier gezeigten Ausführung weist die Projektionsmaske 11 rote, grüne und blaue Farbfilter-Streifen 111, 112, 113 auf, welche durch undurchsichtige Streifen 114 voneinander getrennt sind.

Figur 5b zeigt eine Projektion des Musters auf einem weißen Hintergrund. Die Projektionsdistanz beträgt bevorzugt zwischen 6 und 14mm. Dabei wir das Farbstreifenmuster "unscharf" auf die zu scannende Oberfläche projiziert. Auf diese Art und Weise entsteht ein stetiger Intensitätsverlauf der Farben.

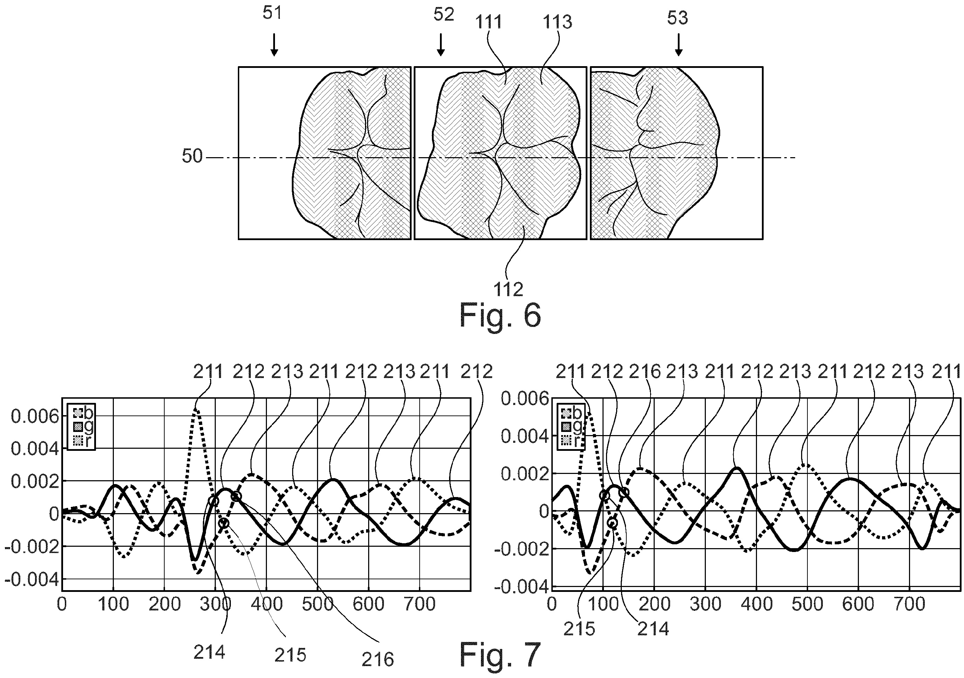

Figur 6 sind 3 Kamerabilder auf denen die Projektion gemäß Figur 5b auf der Oberfläche eines Zahnmodells 40 aufgenommen wurde. Die einzelnen Farbstreifen rot 111, grün 112 und blau 113 werden durch die optischen Eigenschaften des Zahnes zusätzlich geglättet und verlaufen dadurch mehr ineinder. Durch die unebene Oberfläche der Zähne verlaufen die einzelnen Streifen in der Projektion nicht mehr rein parallel zueinander. Mit der gestrichelten Linie ist eine Kamerazeile 50 dargestellt, die in Figur 7 bezüglich des Farbverlaufs analysiert wird.

Die Zeilen verlaufen entsprechend bevorzugt orthogonal zu den Farbstreifen 111, 112 und 113.

Figur 7 zeigt bei zwei Kameras den Intensitätsverlauf der einzelnen Farben entlang der Kamerazeile 50 aus Figur 6. Zu erkennen ist, dass die Farbstreifen 111, 112 und 113 in einer Kamerazeile 50 Minima und Maxima besitzen. Vergleicht man den Intensitätsverlauf der einzelnen Farben so sieht man ähnliche Verläufe und korrespondierende Punkte Maxima (211, 212, 213) oder Schnittpunkte (214, 215, 216). Weitere Werte dazwischen lassen sich ebenfalls zuordnen. Die Verschiebung der einzelnen Bildpixel (Disparität) innerhalb der Zeile kann so Punkt für Punkt ermittelt werden.

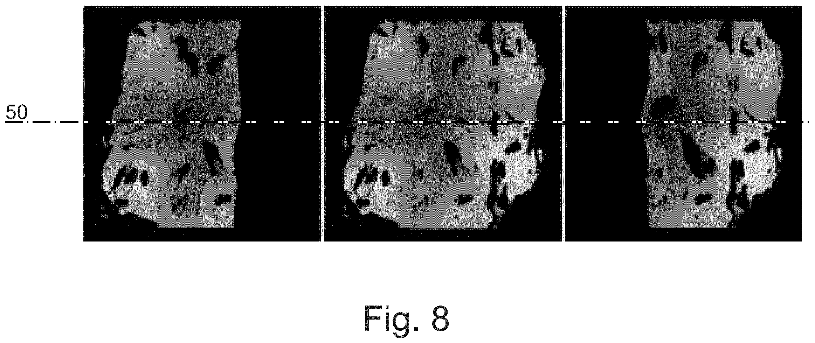

Figur 8 zeigt drei Disparitätenkarten - einmal (linke Karte) von der linken Kamera zur mittleren Kamera und (rechte Karte) von der mittleren zur rechten Kamera und (mittlere Karte) eine kombinierte Disparitätskarte. Die Disparität wurde jeweils zur mittleren Kamera berechnet. Aus der Disparität kann die Tiefe ermittelt werden. Dunkle Punkte bedeuten, dass die Disparität nicht bestimmt oder nicht genügend genau bestimmt werden kann. Helle Werte zeigen eine hohe Disparität respektive die Nähe zur Kamera Die linke Disparitätskarte ist begrenzt auf der rechten Seite, die rechte auf der linken Seite, da die Disparität nur für Bereiche bestimmt werden kann, die die entsprechende Kameras "sehen".

Die beiden Disparitätskarten haben einen Überlappungsbereich bei dem man zwei Disparitätswerte je Bildpixel erhalten kann. Dadurch lässt sich die mittlere Karte berechnen, die im Überlappungsbereich Disparitäs Tiefenwerte mit höherer Genauigkeit aufweist.

## Patentansprüche

1. Verfahren zum Erstellen von 3-dimensionalen Bildern mit Hilfe einer ScanVorrichtung umfassend die Schritte:
- Projizieren eines Farbstreifenmusters (111, 112, 113) auf eine zu erfassende Oberfläche (40),
- Aufnahme einer Mehrzahl von Bildern mit Hilfe wenigstens 3 voneinander beabstandeter und in einer Ebene angeordneter Kameras (13),
wobei die Mehrzahl von Bildern eine Mehrzahl von Bildergruppen umfasst, die jeweils zeitgleich mit Hilfe der wenigstens 3 Kameras (13) aufgenommene Bilder enthalten,
- Weiterleiten der Mehrzahl von Bildern an eine Recheneinheit,
- Vergleichen von wenigstens 2 der von den wenigstens 3 Kameras (13) gleichzeitig aufgenommenen Bildern (Bilderpaar),
- Erkennen von korrespondierenden Mustern in dem Bilderpaar, die jeweils demselben Teilbereich der zu erfassenden Oberfläche (40) entsprechen,
- Berechnen der Verschiebung einzelner Bildpixel der übereinstimmenden Muster bzw. der Bildpixel des Bilderpaars,
- Erstellen wenigstens einer Tiefenkarte mit Tiefeninformationen aus wenigstens einem Bilderpaar,
- Zusammenfügen der aus den Bildern der Bildergruppen erzeugten Tiefenkarten ,
**dadurch gekennzeichnet, dass** das auf eine Oberfläche (40) projizierte und von den Kameras (13) erfasste Farbstreifenmuster (111, 112, 113) weitgehend stetige Intensitätsverläufe in den einzelnen Farbkanälen erzeugt, wobei übereinstimmende Pixel oder Muster in den Bilderpaaren durch einen Vergleich der Richtungen und Längen der Farbvektoren im Farbraum erkannt werden.

2. Verfahren nach Anspruch 1, **dadurch gekennzeichnet, dass** von jeder Bildergruppe wenigstens zwei Bilderpaare gebildet werden und jeweils auf korrespondierende Muster untersucht werden.

3. Verfahren nach Anspruch 2, **dadurch gekennzeichnet, dass** die Tiefeninformationen von wenigstens zwei Bilderpaaren einer Bildergruppe miteinander verglichen werden, um eine höhere Informationsqualität und Sicherheit zu erreichen.

4. Verfahren nach Anspruch 1, **dadurch gekennzeichnet, dass** das Farbstreifenmuster mit Hilfe von 3 Laserdioden (32b) und wenigstens einem diffraktiven optischen Element (16) oder durch 3 LEDs (32a) und einer Farbfiltermaske (11) und einem Objektiv (12) erzeugt wird.

5. Verfahren nach Anspruch 1, **dadurch gekennzeichnet, dass** die Farbstreifenmuster (111, 112, 113) intermittierend auf die zu erfassende Oberfläche (40) projiziert werden und innerhalb der Projektionsdauer die Bilder wenigstens einer Bildergruppe erfasst werden.

6. Verfahren nach Anspruch 5, **dadurch gekennzeichnet, dass** versetzt intermittierend zu der Projektion des Farbstreifenmusters (111, 112, 113) eine weiße LED die zu erfassende Oberfläche (40) beleuchtet, um eine Aufnahme mit wenigstens einer der Kameras (13) und eine farbechte Ausgabe auf einem Monitor zu ermöglichen bzw. sie für das menschliche Auge besser wahrnehmbar zu machen und störendes Flackern zu verringern.

7. Verfahren nach Anspruch 6, **dadurch gekennzeichnet, dass** die Reflexion des von der weißen LED ausgestrahlten Lichtes mit Hilfe eines Sensors aufgefangen und zur Bestimmung der Farbe der zu scannenden Oberfläche (40) verwendet wird.

8. Verfahren nach einem der vorangehenden Ansprüche, **dadurch gekennzeichnet, dass** der Scanvorgang unterbrochen wird, wenn die festgestellte Bewegung der Kameras (13) über einem festgelegten Grenzwert liegt und automatisch fortgesetzt wird, wenn die mit Hilfe eines Beschleunigungssensors festgestellte Bewegung der Kameras (13) unterhalb eines vorherbestimmten Schwellenwertes liegt.

9. Verfahren nach einem der vorangehenden Ansprüche, **dadurch gekennzeichnet, dass** das Scan-Verfahren über einen Vergleich von aufgenommenen Beschleunigungsmustern mit - in einem Speicher abgelegten - Beschleunigungsmustern gesteuert wird (Gesten).

10. Verfahren nach einem der vorangehenden Ansprüche, **dadurch gekennzeichnet, dass** im Gegensatz zu Triangulationsverfahren keine Kalibrierung vor oder während der Durchführung des Scans erfolgen muss.

11. Scan-Vorrichtung zur Durchführung eines intraoralen Scans für zahnmedizinische Zwecke, umfassend:
- eine Steuereinheit,
- eine Recheneinheit,
- ein mit der Steuereinheit und/oder der Recheneinheit zum Austausch von Informationen verbundenes Handstück (30) mit einem zur Einführung in die Mundhöhle eines Patienten vorgesehenen distalen Abschnitt (10),
- wobei auf dem distalen Abschnitt wenigstens 3 in einer Ebene angeordnete Kameras (13) und zumindest ein diffraktives optisches Element (16) oder wenigstens eine Maske (11) angeordnet sind,
- wobei das oder die diffraktiven optischen Elemente (16) zusammen mit wenigstens einer Laserdiode (32b) oder die Maske (11) zusammen mit wenigstens 3 LEDs (32a) und einem Objektiv oder Prisma (12) dazu ausgebildet sind, während des Scan-Vorgangs ein Farbstreifenmuster (111, 112, 113) auf die zu scannende Oberfläche (40) zu projizieren, und
- wobei die Recheneinheit dazu ausgebildet ist, mit Hilfe der während des Scan-Vorgangs aufgenommenen Bilder unter Anwendung des stereo-matching Verfahrens Tiefenkarten zu erzeugen und an ein Verfahren zur Zusammensetzung der Tiefenkarten zu übergeben,
**dadurch gekennzeichnet, dass** das auf eine Oberfläche (40) projizierte und von den Kameras (13) erfasste Farbstreifenmuster (111, 112, 113) weitgehend stetige Intensitätsverläufe in den einzelnen Farbkanälen erzeugt, und die Recheneinheit dazu ausgebildet ist, Änderungen im Farbraum zur Erkennung übereinstimmender Muster in den Bilderpaaren zu verwenden.

12. Scan-Vorrichtung nach Anspruch 11, wobei zur Erzeugung der Farbstreifenmuster (111, 112, 113) ein diffraktives optisches Element (16) mit 3 Bereichen über Lichtwellenleiter mit 3 in einem proximalen Abschnitt des Handstücks (30) angeordneten Laserdioden (32b) (rot, grün, blau) optisch verbunden sind.

13. Scan-Vorrichtung nach Anspruch 11, wobei zur Erzeugung stetiger Intensitätsübergänge des Farbstreifenmusters (111, 112, 113) ein Vibrationsmechanismus vorgesehen ist, welcher das diffraktive optische Element in Schwingung versetzt, die Farbstreifenmuster dadurch "verwischt" und die Speckle reduziert.

14. Scan-Vorrichtung nach Anspruch 11, **dadurch gekennzeichnet, dass** die Laserstrahlen direkt und ohne Lichtwellenleiter (21) in das oder die diffraktiven optischen Elemente (16) eingekoppelt sind.

15. Scan-Vorrichtung nach Anspruch 11, **dadurch gekennzeichnet, dass** auf dem Kopfstück (10) der Scan-Vorrichtung eine Führungshilfe (18) angeordnet ist, die insbesondere eine Führung des Kopfstücks (10) entlang der Innenkante und entlang der Außenkante der Backenzähne ermöglicht.
